# EUROPEAN PATENT APPLICATION

(11) **EP 4 589 456 A1**
(43) Date of publication of application: **23.07.2025**
(21) Application number: 25152212.4
(22) Date of filing: 16.01.2025
(51) Int. Cl.: G06F 21/10, G06F 3/12, H04L 9/40, B41J 29/00, G06Q 30/0251

(54) **INFORMATION PROCESSING APPARATUS, METHOD FOR CONTROLLING INFORMATION PROCESSING APPARATUS, PROGRAM, AND STORAGE MEDIUM**

(30) Priority: 19.01.2024 JP 2024006859
(71) Applicant: CANON KABUSHIKI KAISHA, Tokyo 146-8501 (JP)
(72) Inventor: UKEJI, Nobutaka, Tokyo, 146-8501 (JP)
(74) Representative: TBK

(57) **Abstract**

An information processing apparatus (200) includes: an acceptance-unit configured to accept a user operation indicating whether or not consent is given to a first-permission-content, which is related to information transmission from an electronic-device, and a user operation indicating whether or not consent is given to a second-permission-content, which is different from the first-permission-content and related to information transmission from the electronic-device; and a control-unit configured so that, in a case where an operation indicating non-consent to the first-permission-content is accepted, control of transmitting to the electronic-device second-information, which corresponds to non-consent, is performed regardless of whether or not an operation indicating consent to the second-permission-content is accepted.

## Description

### BACKGROUND

### Field

The present disclosure relates to an information processing apparatus, a method for controlling an information processing apparatus, an electronic device, a method for controlling an electronic device, a program, and a storage medium.

### Description of the Related Art

Conventionally, a system has been widely used in which, with the consent of a user, status information of an electronic device is transmitted to a server, and the server analyzes the status information to provide a service suited to the state of the electronic device.

Japanese Patent Laid-Open No. 2020-019238 describes a system in which consent for permission to transmit information is obtained from a user of a multifunction peripheral and then status information is transmitted to a server to be utilized in a service.

Further, Japanese Patent Laid-Open No. 2016-162063 describes a system in which permission to transmit information is obtained again from the user due to the influence of additional functions in cases of a software update.

### SUMMARY

In recent years, the handling of personal information has become stricter, and it has become necessary to support the acceptance of consent for multiple purpose-specific permission statements. That is, users are now required to give consent to both service permission for the service received and analysis permission for the collection of information for vendor development purposes. It is necessary to version-control these permission statements so that they can be kept up to date with amendments to the Act on the Protection of Personal Information and the like that come into effect after an electronic device is released. However, even if an external device (for example, a mobile terminal such as a smartphone) supports purpose-specific permissions, electronic devices released in the past may not support purpose-specific permissions. Even in such cases, it is necessary to comply with the legally required purpose-specific permissions.

The present invention in its first aspect provides an information processing apparatus as specified in claims 1 to 12.

The present invention in its second aspect provides a control method of an information processing apparatus as specified in claims 13 and 14.

The present invention in its third aspect provides a program causing a computer of an information processing apparatus as specified in claim 15.

The present invention in its third aspect provides a storage medium storing a program causing a computer of an information processing apparatus as specified in claim 16.

Further features of the present invention will become apparent from the following description of exemplary embodiments with reference to the attached drawings.

### BRIEF DESCRIPTION OF THE DRAWINGS

Fig. 1 is a configuration diagram of the system;
Fig. 2A and Fig. 2B are block diagrams of an electronic device and an external device;
Fig. 3A to Fig. 3C are examples of a display screen of an image processing apparatus;
Fig. 4 is a processing flow diagram for the external device;
Fig. 5 is an example of a permission acquisition screen in the external device;
Fig. 6A to Fig. 6D are examples of how permission information is held and converted; and
Fig. 7 is a processing flow diagram for the electronic device.

### DESCRIPTION OF THE EMBODIMENTS

In the present disclosure, an explanation is given of a system for more appropriately reflecting the consent status accepted from a user on an electronic device.

Hereinafter, explanations are illustratively given of embodiments of the present disclosure with reference to the drawings. However, the constituent elements described in the present embodiments are presented as forms of an example in the present disclosure, and are not intended to limit the scope of the present disclosure to those.

### <First Embodiment>

Hereinafter, an explanation is given of an embodiment in which an image processing apparatus is used as an electronic device according to the present disclosure. In the present embodiment, a permission version is assigned to permission statement in order to manage updates to the permission statement. The latest version is configured to encompass the previous versions, and in a case of requesting user's consent for permission, the permission statement of the latest version is used.

In the present embodiment, the permission for information collection is divided into the service permission and the analysis permission. The service permission refers to the permission to transmit information necessary for providing a service. The analysis permission refers to the permission to transmit information that is not essential for providing the service so that the service provider can use it for user analysis. Therefore, the user is requested to give consent separately for the service permission and for the analysis permission.

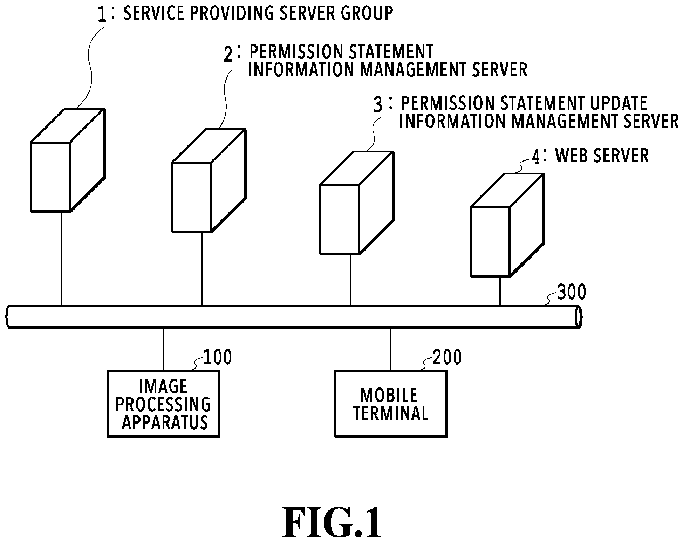

Fig. 1 is a configuration diagram illustrating the overall configuration of the information processing system. The information processing system includes the server system (the service providing server group 1, the permission statement information management server 2 that manages the information of the latest version of the permission statements, and the permission statement update information management server 3 that manages the update information of the permission statements) for providing services. Further, the information processing system includes the image processing apparatus 100, the web server 4, and the communication network 300. The service providing server group 1 includes servers for providing cloud services to the image processing apparatus 100. Cloud services include services such as printing image data on the cloud using the image processing apparatus 100, saving image data scanned by the image processing apparatus 100 on the cloud, etc.

The permission statement information management server 2 manages the latest permission versions of the permission statements. In a case where the permission statement for which the user is to give consent is changed due to the addition of a function, a legal amendment, etc., the latest permission version is updated.

The permission statement update information management server 3 manages transmittable permission versions separately by country as the permission versions necessary for performing information transmission. Further, the permission statement update information management server 3 determines the country in which the image processing apparatus 100 is installed, and returns the respective transmittable permission versions of the service permission and the analysis permission that correspond to that country. In a case where a permission statement that requires the user's consent is changed due to the addition of a function, a legal amendment, etc., the transmittable permission version information in the server is updated.

The web server 4 records the latest permission statements for each country. Note that, in Fig. 1, the permission statement information management server 2 and the permission statement update information management server 3 are described separately as an example of an embodiment, but may also be configured as a single server.

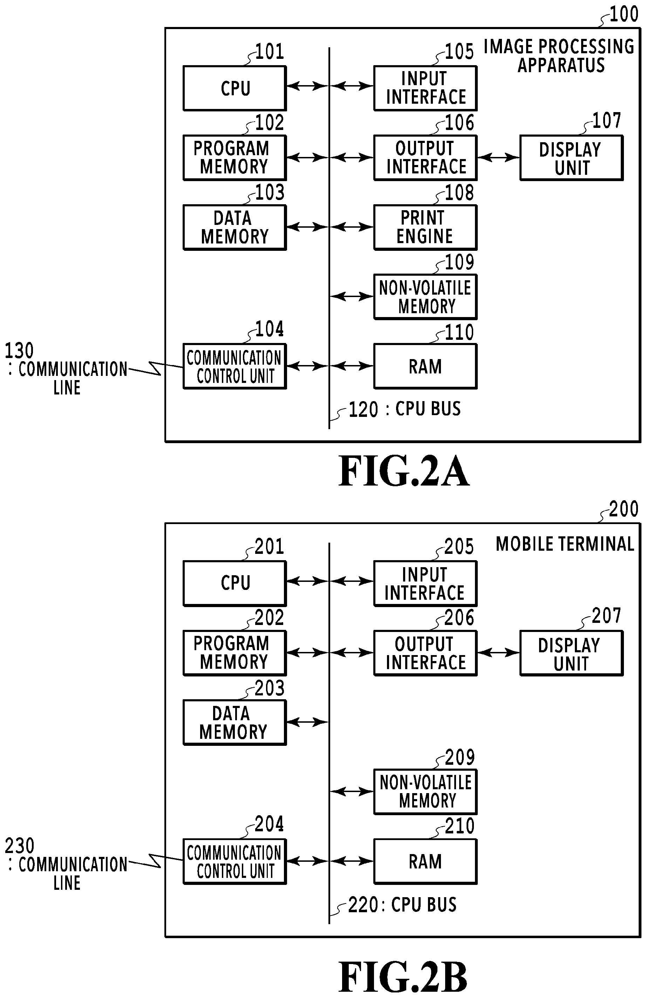

Fig. 2A is a diagram illustrating the configuration of the image processing apparatus 100 in the present embodiment. The image processing apparatus 100 includes the CPU 101, the program memory 102, the data memory 103, the communication control unit 104, the input interface 105, the output interface 106, the display unit 107, the print engine 108, the non-volatile memory 109, and the RAM 110. The CPU 101 is a system control unit that controls the entire image processing apparatus 100. The program memory 102 stores a control program to be executed by the CPU 101, an embedded operating system program, etc.

The data memory 103 stores program control variables and the like, and is equipped with various work buffer areas utilized during processing by the print engine 108. The communication control unit 104 controls data transmission and reception with the outside via the communication line 130. The input interface 105 is an interface for performing the reception of data input and operation instructions from the user, and is configured with a physical keyboard, buttons, a touch panel, etc. Note that, as another possible form, the later-described output interface 106 and the input interface 105 may be configured as the same configuration, so that both screen output and the reception of operations from the user are performed in the same configuration. The output interface 106 is an interface for controlling for the display unit 107 to display data and provide a notification of the state of the image processing apparatus 100.

The display unit 107 is configured with an LED (light emitting diode), an LCD (liquid crystal display device), etc., and displays data and provides a notification of the state of the image processing apparatus 100. Note that it is also possible to accept an input from the user via the display unit 107 by installing a soft keyboard equipped with keys such as numeral input keys, a mode setting key, a determination key, a cancel key, a power key, etc., on the display unit 107.

The print engine 108 forms an image on a recording medium such as paper using a recording material such as ink, based on the information saved in the data memory 103 and a received print job, so as to output the print result. The non-volatile memory 109 is configured with a device such as an EEPROM (Electrically Erasable Programmable Read-Only Memory) or a flash memory. The non-volatile memory 109 is mainly used for the purpose of saving data such as the setting values of the image processing apparatus 100 and the like that need to be held even while power is not supplied to the image processing apparatus 100.

The RAM 110 is configured with a DRAM (Dynamic Random Access Memory) or the like that requires a backup power supply. The RAM 110 is also used as the main memory and the work memory of the CPU 101, and saves a reception buffer for temporarily saving the print information received from a PC or the like, as well as various types of information. The above-described constituent elements 101 to 106 and 108 to 110 are connected to each other via the CPU bus 120 managed by the CPU 101.

The image processing apparatus 100 is capable of communicating with each server and the mobile terminal 200 illustrated in Fig. 1 via the communication network 300. The image processing apparatus 100 communicates with each server to acquire the permission statements, the permission versions linked to the permission statements, etc., and holds them in the non-volatile memory 109.

Fig. 2B is a diagram illustrating the configuration of the mobile terminal 200 in the present embodiment. The mobile terminal 200 is an information processing apparatus, such as a smartphone. The mobile terminal 200 includes the CPU 201, the program memory 202, the data memory 203, the communication control unit 204, the input interface 205, the output interface 206, the display unit 207, the non-volatile memory 209, and the RAM 210.

The CPU 201 is a system control unit that controls the entire mobile terminal 200. The program memory 202 stores a control program to be executed by the CPU 201, an embedded operating system program, etc. The data memory 203 stores program control variables and the like, and is equipped with various work buffer areas. The communication control unit 204 controls data transmission and reception with the outside via the communication line 230.

The input interface 205 is an interface for accepting data input and operation instructions from the user, and is configured with a physical keyboard, buttons, a touch panel, etc. Note that, as another possible form, the later-described output interface 206 and the input interface 205 may be configured as the same configuration, so that both screen output and the reception of operations from the user are performed in the same configuration. The output interface 206 is an interface for controlling for the display unit 207 to display data and provide a notification of the state of the mobile terminal 200.

The display unit 207 is configured with an LED (light emitting diode), an LCD (liquid crystal display device), etc., and displays data and provides a notification of the state of the mobile terminal 200. Note that it is also possible to accept input from the user via the display unit 207 by installing a soft keyboard equipped with keys such as numeral input keys, a mode setting key, a determination key, a cancel key, a power key, or the like, on the display unit 207.

The non-volatile memory 209 is configured with a device such as an EEPROM (Electrically Erasable Programmable Read-Only Memory) or a flash memory. The non-volatile memory 209 is mainly used for the purpose of saving data such as the setting values of the mobile terminal 200 and the like that need to be held even while power is not supplied to the mobile terminal 200.

The RAM 210 is configured with a DRAM (Dynamic Random Access Memory) or the like that requires a backup power supply. The RAM 210 is also used as the main memory and the work memory of the CPU 201, and saves a transmission buffer for temporarily saving information to be transmitted to the mobile terminal 200, as well as various types of information. The above-described constituent elements are connected to each other via the CPU bus 220 managed by the CPU 201.

The mobile terminal 200 is capable of communicating with each server and the image processing apparatus 100 illustrated in Fig. 1 via the communication network 300. The mobile terminal 200 communicates with each server to acquire the permission statements, the permission versions linked to the permission statements, etc., and holds them in the non-volatile memory 209.

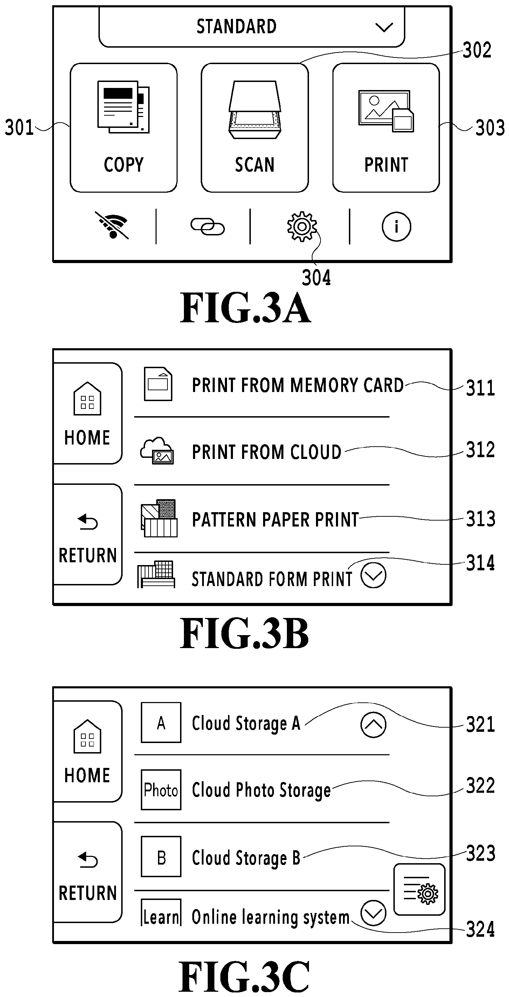

Fig. 3A to Fig. 3C are diagrams illustrating an example of display screens displayed on the display unit 107 of the image processing apparatus 100. Fig. 3A is a display example of the initial screen (the home screen) that is displayed first after the image processing apparatus 100 is activated. The option buttons 301 to 303 corresponding to the functions executable by the image processing apparatus 100, such as copy, scan, and print, are displayed. Fig. 3B illustrates a print screen to which the screen transitions if the "PRINT" button 303 in Fig. 3A is selected. By selecting "PRINT FROM CLOUD" 312 on the print screen, the selection of a cloud service can be performed. On the print screen illustrated in Fig. 3B, "PRINT FROM MEMORY CARD" 311, "PRINT FROM CLOUD" 312, "PATTERN PAPER PRINT" 313, and "STANDARD FORM PRINT" 314 can be selected. If the user has given consent to the service permission for the image processing apparatus 100, it is possible to register a cloud service.

Fig. 3C is a list of registered cloud services, to which the screen transitions if "PRINT FROM CLOUD" 312 is selected on the print screen in Fig. 3B after registering the cloud services, and is a display screen for selecting a registered cloud service. In Fig. 3C, the options 321 to 324 are displayed. If the user has not given consent to the service permission for the image processing apparatus 100, in a case where printing from the cloud is selected in Fig. 3B, a permission confirmation screen (not illustrated in the drawings) is displayed in the image processing apparatus 100 as an attempt to acquire consent regarding the service permission from the user.

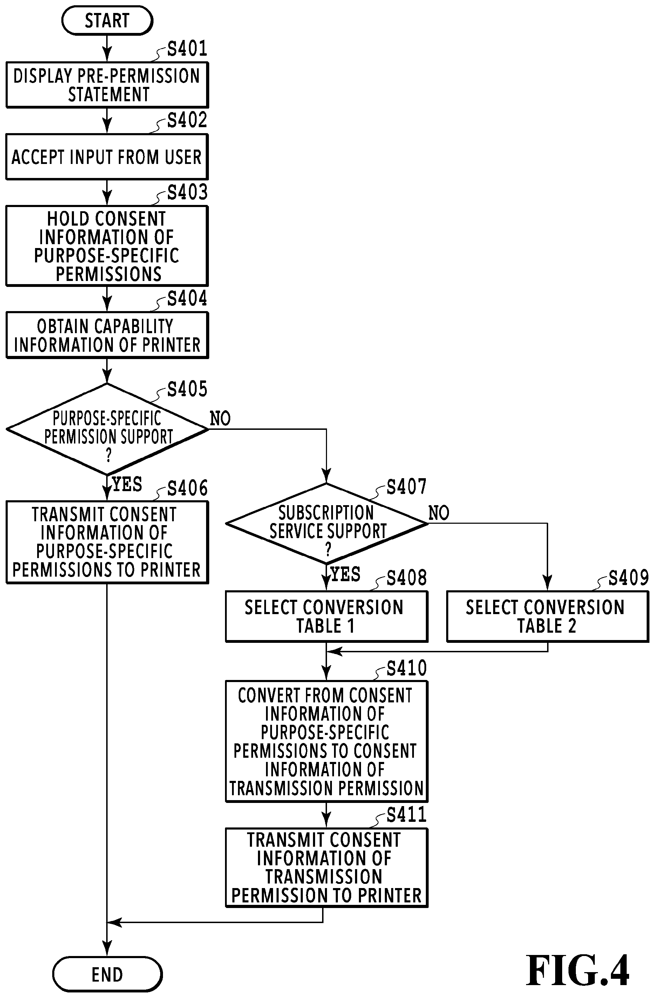

Fig. 4 is a flowchart of the mobile terminal 200 in the present embodiment. An explanation is hereinafter given of the flow of processing up to the transmission of the consent information, which is held by the mobile terminal 200 and indicates whether or not the user has given consent regarding the permission, to the image processing apparatus 100.

Each process in the present flowchart is implemented by the CPU 201 loading a program stored in the program memory 202 into the RAM 210 and executing it. The program stored in the program memory 202 is, for example, print application software (hereinafter simply referred to as an app) to utilize the image processing apparatus 100. Further, the symbol "S" in the explanation of each process below indicates a step in the flowchart, and the same applies to the following embodiments.

In S401, if the mobile terminal 200 transitions to a screen requesting consent to the permission due to a user operation or the like, the CPU 201 displays the permission consent screen on the display unit 207.

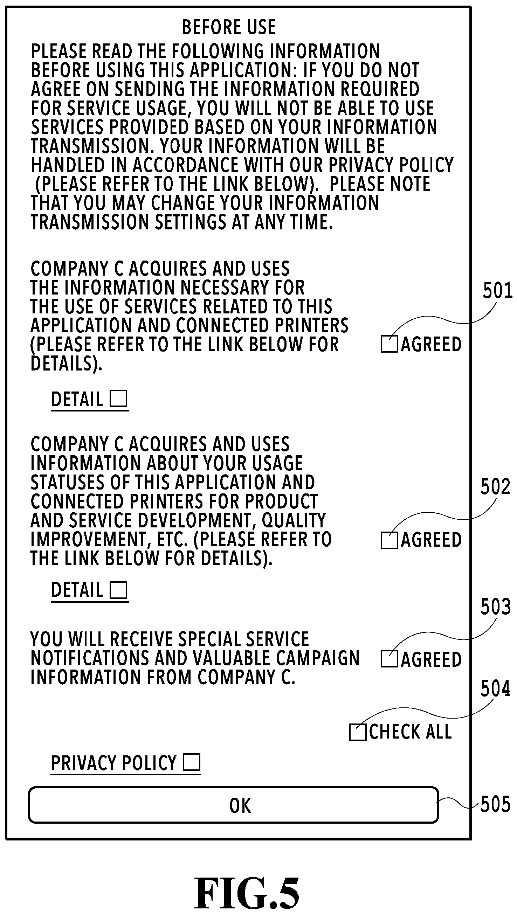

Fig. 5 is an example of the permission consent screen. The permission consent screen displays the permission statements to the user. The permission statements in the present embodiment include three kinds of statements: the above-mentioned "service permission" and "analysis permission," as well as "permission to provide guidance information." Checkboxes are arranged to indicate consent for each of the permission statements. The "permission to provide guidance information" is permission for the mobile terminal 200 to periodically provide the user with guidance information, and is permission that is not required by the image processing apparatus 100.

The checkbox 501 in the upper part is an operation item for accepting an operation of giving consent to the permission statement of the service permission. If the checkbox 501 is checked and the OK button 505 is touched, consent is given to the service permission. The checkbox 502 in the middle is an operation item for accepting an operation of giving consent to the permission statement of the analysis permission. If the checkbox 502 is checked and the OK button 505 is touched, consent is given to the analysis permission. The checkbox 503 in the middle is an operation item for accepting an operation of giving consent to the permission statement of the permission to provide guidance information. The permission to provide guidance information is permission as to whether or not a push notification may be sent to the mobile terminal 200 (a smartphone) on which the application is installed. Therefore, this permission is not related to the printer main body (the image processing apparatus 100), and thus the presence or absence of a check on the checkbox 503 is not reflected in the printer main body. CHECK ALL 504 is an operational item that accepts an instruction to check all of the above three checkboxes.

In S402, the CPU 201 accepts input related to the consent from the user on the permission consent screen illustrated in Fig. 5. Here, since the "service permission" and the "analysis permission" are the consent information required by the image processing apparatus 100, information regarding whether the consent operations regarding these have been accepted is transmitted to the image processing apparatus 100 in the processing flow described later. The "permission to provide guidance information" is permission to provide guidance information to the user periodically, and is not required by the image processing apparatus 100, so information regarding whether or not a consent operation regarding this has been accepted is not transmitted to the image processing apparatus 100.

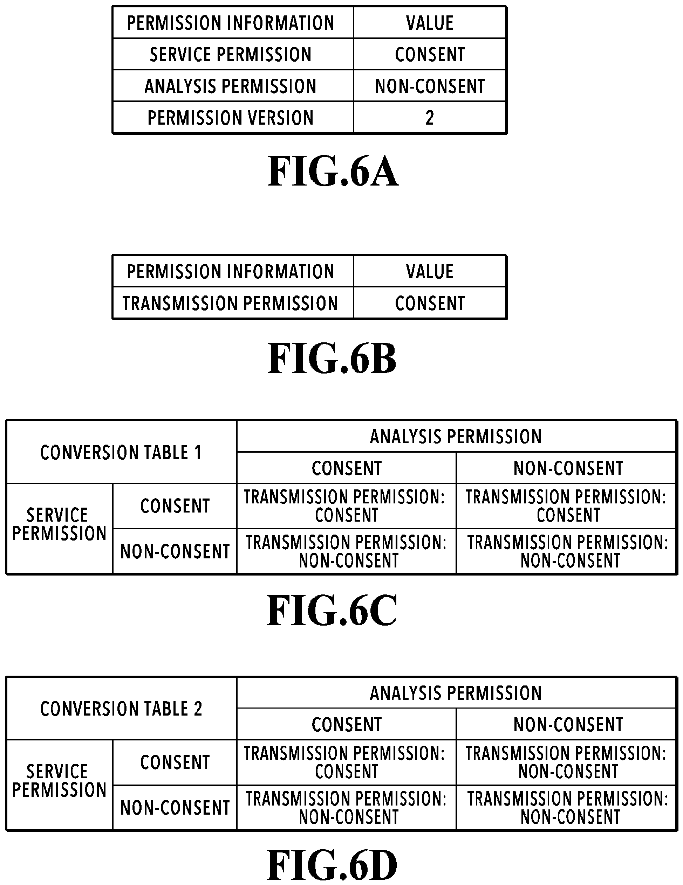

In S403, by the user selecting the OK button 505 in Fig. 5, the CPU 201 holds (records) the consent information for each purpose-specific permission in the non-volatile memory 209. Fig. 6A illustrates a held image of information indicating the consent statuses of the purpose-specific permissions that are held in the mobile terminal 200 due to the process in S403. The example in Fig. 6A is an example in which "CONSENT" is recorded as the "SERVICE PERMISSION," and "NON-CONSENT" is recorded as the "ANALYSIS PERMISSION," and the permission version for which the consent operation was accepted is recorded as "2." In this way, the consent statuses of the purpose-specific permissions include the consent statuses for multiple types of permission statements, such as the "SERVICE PERMISSION" and the "ANALYSIS

### PERMISSION."

In S404, the CPU 201 performs communication with the image processing apparatus 100 using the communication control unit 204, and acquires the capability information of the image processing apparatus 100. The capability information is information to inform an external terminal that communicates with the image processing apparatus 100 of the functions (capabilities) of the image processing apparatus 100. The capability information in the present embodiment includes the "presence or absence of the purpose-specific permission support" and the "presence or absence of the subscription service support."

If the purpose-specific permission support is present, it indicates that the image processing apparatus 100 has the capability to record the consent statuses for multiple types of permission contents, including the consent status of the service permission and the consent status of the analysis permission. If the purpose-specific permission support is absent, it indicates that there is no capability to record the consent statuses for multiple types of permission contents, and only the consent status for one type of permission content can be recorded. That is, in a case where the purpose-specific permission support is absent, the image processing apparatus 100 cannot record the consent statuses of the two types of permissions, i.e., the consent status of the service permission and the consent status of the analysis permission. Note that, in a case where information indicating the presence of the purpose-specific permission support cannot be obtained from the capability information, or in a case where information indicating the absence of the purpose-specific permission support is obtained, the processing proceeds with the purpose-specific permission support being absent.

Further, in a case where the subscription service support is present, it indicates that the image processing apparatus 100 has the capability to utilize the later-described subscription service. It does not matter whether or not the subscription service is actually contracted and being utilized. That is, even if the subscription service support is present, this information does not allow for a determination of whether the subscription service is actually contracted and being utilized or if it is not contracted and not being utilized. In a case where the subscription service support is absent, it indicates that the image processing apparatus 100 does not have the capability to utilize the later-described subscription service. In a case where the subscription service support is absent, it is clear that the subscription service using this printer (the image processing apparatus 100) is neither contracted nor being utilized. Note that, in a case where information indicating the presence of the subscription service support cannot be obtained from the capability information, or in a case where information indicating the absence of the subscription service support is obtained, the processing proceeds with the subscription service support being absent (not supported).

In S405, the CPU 201 determines whether a predetermined condition is satisfied. Specifically, based on the capability information obtained from the image processing apparatus 100, whether or not the purpose-specific permission support is present is determined. In a case where it is determined that the purpose-specific permission support is present (predetermined conditions are satisfied), the processing proceeds to S406. On the other hand, in a case where the image processing apparatus 100 determines that the purpose-specific permission support is not present (in a case where it is determined that the purpose-specific permission support is absent), the processing proceeds to S407. A case where it is determined that the purpose-specific permission support is absent is a case where information indicating the presence of the purpose-specific permission support cannot be obtained from the capability information, or a case where information indicating the absence of the purpose-specific permission support is obtained.

In S406, the CPU 201 performs communication with the image processing apparatus 100 using the communication control unit 204, and transmits to the image processing apparatus 100 the consent information of the purpose-specific permissions held in S403. Since the image processing apparatus 100 supports purpose-specific permissions, the image processing apparatus 100 can understand the received purpose-specific permissions. The consent information of the purpose-specific permissions transmitted to the image processing apparatus 100 includes the consent information of the service permission and the analysis permission, as well as the permission version. Note that, although the image processing apparatus 100 does not require the consent information of the permission to show the guidance to the user explained in S402, that consent information may be transmitted to the image processing apparatus 100. In S406, the consent status of the service permission (information indicating "CONSENT" in the example of Fig. 6A), the consent status of the analysis permission (information indicating "NON-CONSENT" in the example of Fig. 6A), and the permission version (information indicating "2" in the example of Fig. 6A) are transmitted to the image processing apparatus 100. In this case, information indicating the consent status of "TRANSMISSION PERMISSION" is not transmitted as the type of permission. In other words, neither information of consent to the transmission permission nor information of non-consent to the transmission permission is transmitted. That is, information of types different from the information transmitted in S411, which is described later, is transmitted.
Once the processing of S406 ends, the CPU 201 ends the processing of the present flowchart.

In a case where the image processing apparatus 100 does not support purpose-specific permissions, the mobile terminal 200 performs processing to convert the consent status into the transmission permission. Specifically, by the processing from S407 onwards, the consent statuses of the purpose-specific permissions as illustrated in Fig. 6A (i.e., multiple types of permission statuses) are converted into the transmission permission, which is the consent status of a single type of permission as illustrated in Fig. 6B. Then, the consent status of the transmission permission is transmitted to the image processing apparatus 100. Note that the version information included in the consent status of the purpose-specific permissions is transmitted to the image processing apparatus 100 without being converted. In the image processing apparatus 100, the consent status of the received transmission permission and the version information are stored.

In S407, the CPU 201 makes a determination regarding "the presence or absence of the subscription service support" among the capability information obtained from the image processing apparatus 100. In a case where the image processing apparatus 100 supports the subscription service, the processing proceeds to S408, and in a case where the image processing apparatus 100 does not support the subscription service, the processing proceeds to S409.

The subscription service is a service that allows printing up to a maximum number of pages for a monthly (a predetermined period) flat rate. The cost of the recording materials (ink and toner), etc., is included in the monthly flat rate usage fee of the subscription service, and as long as printing is done within the maximum number of pages, there is no additional charge for the recording materials. That is, in a case where the recording material runs short before reaching the maximum number of pages, recording material can be ordered without an additional charge. In a case of utilizing a subscription service, it is essential to transmit the number of printed pages to the server that provides the subscription service. The transmission of information indicating the number of printed pages is equivalent to the information that is transmitted in a case where consent to the analysis permission is given. The user or the printer (the image processing apparatus) that has signed up for a usage contract for the subscription service should have given permission equivalent to consenting to the analysis permission as part of the subscription service contract. That is, consent should have been obtained from the user to transmit the number of printed pages as the transmission of information necessary to utilize the subscription service. Therefore, in a case where a subscription service is being utilized (contracted), it is considered unnecessary to obtain consent for the analysis permission again. Conversely, if the user mistakenly performs a non-consent operation for the analysis permission, it will result in a situation where the user is unable to utilize the subscription service that should have been contracted, which creates an undesirable situation for the user.

In S408, the CPU 201 selects the conversion table 1 for converting the purpose-specific permissions to the transmission permission illustrated in Fig. 6C. The conversion table 1 illustrates that, in a case where an operation indicating consent to the service permission is accepted, information indicating consent (the first information) is transmitted to the image processing apparatus 100 as the transmission permission, regardless of whether or not consent has been given to the analysis permission. In addition, the conversion table 1 illustrates that, in a case where an operation indicating non-consent to the service permission is accepted, information indicating non-consent (the second information) is transmitted to the image processing apparatus 100 as the transmission permission, regardless of whether or not consent has been given to the analysis permission.

On the other hand, in S409, the CPU 201 selects the conversion table 2 that converts from the purpose-specific permissions to the transmission permission illustrated in Fig. 6D. The conversion table 2 illustrates that, in a case where an operation indicating consent to both the service permission and the analysis permission is accepted, information indicating consent (the first information) is transmitted to the image processing apparatus 100 as the transmission permission. In addition, the conversion table 2 illustrates that, in a case where an operation indicating non-consent to at least one of the service permission and the transmission permission (i.e., both or either one) is accepted, information indicating non-consent (the second information) is transmitted to the image processing apparatus 100 as the transmission permission.

In S410, the CPU 201 converts the consent information from the purpose-specific permissions to the transmission permission, using the conversion table 1 or the conversion table 2. In S411, the CPU 201 performs communication with the image processing apparatus 100 using the communication control unit 204, and transmits to the image processing apparatus 100 the consent information of the transmission permission obtained in S410 and the version information held in S403. After that, the CPU 201 ends the processing of the present flowchart.

The reason why the conditions for converting the consent information from the purpose-specific permissions to the transmission permission are different depending on the presence or absence of the subscription service support is as follows. First, in a case where the conversion from the purpose-specific permissions to the transmission permission is to be treated more strictly, it is preferable to give consent to the transmission permission in a case where consent has been obtained for all of the purpose-specific permissions. That is, it is generally preferable to use the conversion table 2 illustrated in Fig. 6D. On the other hand, in a case where the image processing apparatus 100 supports the subscription service but does not support a purpose-specific permission, it is possible that the subscription service is enabled on the condition that consent is given for the transmission permission. If the user has given consent to the service permission to use the subscription service on the mobile terminal 200 but has chosen non-consent for the analysis permission, then according to the conversion table 2 illustrated in Fig. 6D, the transmission permission is non-consent. This prevents the user from enabling the subscription service as intended. Therefore, in order to avoid disadvantages for the user, it is also necessary to confirm the consent information for the transmission permission using only the consent information for the service permission, regardless of the consent status of the analysis permission, as illustrated in the conversion table 1 in Fig. 6C.

That is, in a case where the subscription service is supported, there is a possibility that the subscription service is contracted and being utilized. Therefore, as in the present embodiment, in a case where the consent statuses are transmitted to a device model that does not support a purpose-specific permission and does support the subscription service, the conversion table 1 is used. This makes it possible to avoid the above-described undesirable situation in a case where the subscription service is contracted and being utilized. Note that, in the present embodiment, an explanation is given of the example in which either one of the conversion table 1 and the conversion table 2 is used depending on the presence or absence of support for the subscription service. However, there is no such limitation, and in a case where it is possible to acquire information (the utilization status information) indicating whether or not the subscription service is contracted and is being utilized, the conversion table to be used may be chosen accordingly. That is, in a case where it can be determined based on the utilization status information that the subscription service is contracted and being utilized, the conversion table 1 may be used, and if this is not the case (for example, in a case where the device model supports the subscription service but the subscription service is not contracted), the conversion table 2 may be used.

Note that, in the present embodiment, the conversion table to be used is selected depending on the presence or absence of support for the subscription service. However, the selection criteria for the conversion table are not limited to the presence or absence of support for the subscription service. **In** addition to the subscription service, if the conditions for using the image processing apparatus 100 include consent to the service permission, this may serve as a condition for selecting the conversion table 1.

Further, rather than selecting the conversion table to be used based on conditions, the conversion may always be done based on either one of them. That is, the processing may proceed to S408 without performing the processing in S407. Conversely, the processing may proceed to S409 without performing the processing in S407.

Further, in the present embodiment, after acquiring the capability information of the image processing apparatus 100 in S404, the consent statuses of the purpose-specific permissions (the consent statuses regarding multiple types of permission) or the consent status of the transmission permission (a single consent status) is transmitted to the image processing apparatus 100. However, acquiring the capability information is not always necessary. For example, both the consent statuses of the purpose-specific permissions and the consent status of the transmission permission obtained by converting the purpose-specific permissions may be transmitted to the image processing apparatus 100 without acquiring the capability information of the image processing apparatus 100. That is, it is possible to adopt a method that leaves it to the image processing apparatus 100 to decide how to reflect and set each piece of transmitted permission information.

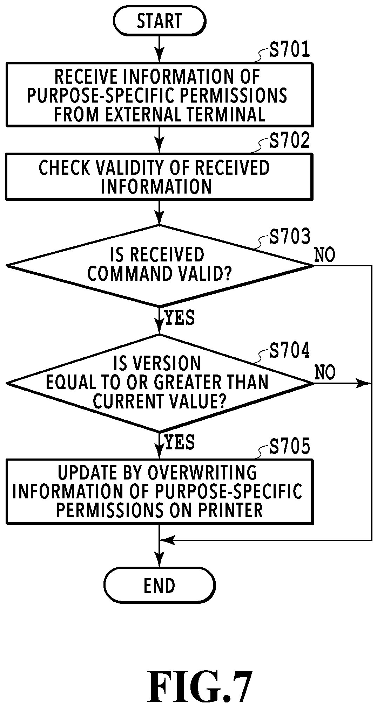

Fig. 7 is a flowchart of the image processing apparatus 100 in the present embodiment. An explanation is given of the flow of processing in the image processing apparatus 100 from receiving information indicating the consent statuses of the purpose-specific permissions from the mobile terminal 200 to holding the information in the non-volatile memory 109. Each process in the present flowchart is implemented by the CPU 101 loading a program stored in the program memory 102 into the RAM 110 and executing it.

**In** S701, the CPU 101 in the image processing apparatus 100 performs communication with the mobile terminal 200 using the communication control unit 104 and receives information indicating the consent statuses of the purpose-specific permissions (i.e., information indicating the consent statuses for multiple types of permission statements). In S702, the CPU 101 checks the validity of the received information indicating the consent statuses of the purpose-specific permissions. Here, checking the validity refers to a control to check whether the information indicating the consent statuses of the purpose-specific permissions obtained through communication can be interpreted by the image processing apparatus 100. For example, for an image processing apparatus 100 that was released in the past and has not had its firmware updated, there is a possibility that the information indicating the consent statuses of the purpose-specific permissions, which is transmitted from the mobile terminal 200 and accepted by the latest app, is unknown. The image processing apparatus 100 then attempts to set the information indicating the consent statuses of the purpose-specific permissions so that it can interpret.

In S703, the CPU 101 determines whether the received information indicating the consent statuses of the purpose-specific permissions are valid, i.e., whether the purpose-specific permissions can be interpreted by the image processing apparatus 100. In a case where the information indicates the consent statuses of purpose-specific permissions that cannot be interpreted, the CPU 101 ends the processing of the present flowchart. In a case where the information indicates the consent statuses of purpose-specific permissions that can be interpreted, the CPU 101 proceeds to S704.

In S704, the CPU 101 makes a determination of the permission version from the received information indicating the consent statuses of the purpose-specific permissions. That is, the CPU 101 compares the received permission version with the permission version held by the image processing apparatus 100 in the non-volatile memory 109 to determine their magnitude relationship. In a case where the value of the received permission version is equal to or greater than the current value of the held permission version, it is determined that the permission statement matches or is more recent one. In a case where it is determined that the value of the received permission version is equal to or greater than the value of the held permission version, the CPU 101 proceeds to S705. In a case where it is determined that the value of the received permission version is less than the value of the held permission version, the CPU 101 does not perform an update of the information indicating the consent statuses of the purpose-specific permissions already held in the non-volatile memory 109 (the information held before the reception in S701). Then, the processing of the present flowchart ends. That is, the information received in S701 is discarded. This is because it is determined that the consent information of the received purpose-specific permission cannot be used for updating since, if the value of the received permission version is less than the value of the held permission version, it indicates that the permission statement is outdated.

**In** S705, the CPU 101 updates (overwrites) the information indicating the consent statuses of the purpose-specific permissions held in the non-volatile memory 109 based on the information indicating the consent statuses of the purpose-specific permissions received in S701. After that, the CPU 101 ends the processing of the present flowchart. Note that, if the received information indicating the consent statuses are for the transmission permission and no information of the permission version is received, only a check on the validity of the received information (the process in S703) is performed. In a case where the received information is determined to be valid, the information indicating the consent statuses is updated based on the information received in S701 without performing the process in S704.

The above is an explanation of the process in which the mobile terminal 200 accepts from the user an operation to indicate whether or not to give consent to the purpose-specific permission contents, transmits to the image processing apparatus 100 the information indicating the consent statuses based on the accepted operation, and updates the information indicating the consent statuses in the image processing apparatus 100.

As described above, according to the present embodiment, the acceptance status (the consent status) of a user operation indicating whether or not to give consent to the permission content (the permission statement) in an information processing apparatus can be more appropriately reflected in an electronic device. Specifically, even if the image processing apparatus, which is a type of electronic device, is a device model that does not support purpose-specific permissions, the mobile terminal side (the information processing apparatus side) appropriately converts the purpose-specific permissions accepted from the user into the transmission permission based on the capability information of the image processing apparatus and transmits the transmission permission to the image processing apparatus.

Note that, in the present embodiment, the mobile terminal 200 does not perform a check of the permission version held by the image processing apparatus 100, but there is no such limitation. For example, before transmitting the consent information of the purpose-specific permissions to the image processing apparatus 100 in S406, the mobile terminal 200 acquires the permission version held by the image processing apparatus 100. Then, the following processing may be performed. That is, in a case where the value of the version of the permission contents (on the mobile terminal 200) for which an operation for consent or non-consent has been accepted on the mobile terminal 200 is equal to or greater than the value of the permission version held by the image processing apparatus 100, the information on the purpose-specific permissions or the transmission permission is transmitted. This is the same as the processing in the above-described Fig. 4. On the other hand, in a case where the value of the permission version on the mobile terminal 200 is less than the value of the permission version held by the image processing apparatus 100, control is executed to prevent the transmission of the information on the state of the permission statuses (the purpose-specific permissions or the transmission permission), unlike the processing in the above-described Fig. 4.

Further, in the present embodiment, the recency of the permission statement is verified using the permission version, but there is no such limitation. For example, it is also possible to utilize the information regarding the update date and time of the permission statement, so that the consent information is updated in a case where the update date and time of the permission statement is more recent than the update date and time of the consent information.

Furthermore, multiple pieces of information that can verify the recency may be used, such as a combination of the permission version and the time the consent information was obtained from the user (hereinafter, the consent time). In this case, first, a comparison is performed between the permission version of the received target and the permission version held by the image processing apparatus 100. Then, in this method, if the permission versions match, a comparison is performed between the received consent time and the consent time held in the image processing apparatus 100. This is because, even if the consent time is recent, in a case where the permission version is outdated, the consent information of the image processing apparatus 100 must not be updated, and therefore it is necessary to first verify the recency of the permission version. By combining multiple pieces of information that can verify the recency in this way, it is possible to better reflect the consent information that the user intended in the image processing apparatus 100.

Further, in the present embodiment, the permission version is one common to all the purpose-specific permissions, but there is no such limitation. For example, the service permission and the analysis permission may have corresponding permission versions, and a determination may be made for the permission version for each purpose-specific permission.

Further, in the present embodiment, the explanation is given of a case in which the mobile terminal 200 supports purpose-specific permissions and the image processing apparatus 100 does not support purpose-specific permissions, but the opposite case is also possible, which may be a case where the mobile terminal 200 does not support purpose-specific permissions, but the image processing apparatus 100 supports purpose-specific permissions. In this case, the transmission permission is transmitted from the mobile terminal 200 to the image processing apparatus 100, and thus the transmission permission received by the image processing apparatus 100 is not reflected in the purpose-specific permissions. This is because setting the purpose-specific permissions from the transmission permission would go against the strengthening of the Act on the Protection of Personal Information, which is the background to the introduction of the purpose-specific permissions.

Note that the various controls in the explanation given above, which are performed by the mobile terminal 200 and the image processing apparatus 100, may be performed by a single piece of hardware, or multiple pieces of hardware (for example, multiple processors or circuits) may share the processing to perform control of the entire apparatus.

Further, although the present invention has been described in detail based on preferable embodiments thereof, the present invention is not limited to these specific embodiments, and, various forms are also included in the present invention to the extent of not departing from the gist of this invention. Moreover, each of the above-described embodiments merely illustrates one embodiment of the present invention, and it is also possible to appropriately combine each of the embodiments.

Further, in the above-described embodiments, the explanations are given using an example in which the present invention is applied to a mobile terminal and an image processing apparatus, but this invention is not limited to this example and can be applied to any electronic device that handles purpose-specific permissions. That is, the present invention is applicable to personal computers, PDAs, mobile phone terminals, portable image viewers, printer apparatuses equipped with a display device, and the like. Further, this invention can also be applied to digital photo frames, music players, game consoles, e-book readers, televisions, tablet devices, set-top boxes, audio speakers, and the like.

According to the present disclosure, a consent status accepted from a user can be more appropriately reflected in an electronic device.

### <Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus (200) comprising:
an acceptance unit configured to accept a user operation indicating whether or not consent is given to a first permission content, which is related to information transmission from an electronic device, and a user operation indicating whether or not consent is given to a second permission content, which is different from the first permission content and related to information transmission from the electronic device; and
a control unit configured so that
in a case where an operation indicating consent to the first permission content is accepted and an operation indicating consent to the second permission content is accepted, control of transmitting to the electronic device first information, which corresponds to consent, is performed,
in a case where an operation indicating consent to the first permission content is accepted and an operation indicating non-consent to the second permission content is accepted, control of transmitting the first information to the electronic device is performed without transmitting information indicating non-consent to the second permission content, and
in a case where an operation indicating non-consent to the first permission content is accepted, control of transmitting to the electronic device second information, which corresponds to non-consent, is performed regardless of whether or not an operation indicating consent to the second permission content is accepted.

2. The information processing apparatus according to claim 1,
wherein the control unit performs control so that the second information is not transmitted in a case where the first information is transmitted, and the first information is not transmitted in a case where the second information is transmitted.

3. The information processing apparatus according to claim 2, further comprising:
an acquisition unit configured to acquire capability information of the electronic device, and
wherein the control unit performs control so that,
in a case where the capability information acquired by the acquisition unit does not meet a predetermined condition, even if a user operation indicating whether or not consent is given to each of the first permission content and the second permission content is accepted by the acceptance unit, the first information or the second information is transmitted to the electronic device as first-type information which is a single piece of information, without transmitting information indicating whether or not consent is given to each of the first permission content and the second permission content, and
in a case where the capability information acquired by the acquisition unit meets the predetermined condition, both second-type information indicating whether or not an operation indicating consent to the first permission content is accepted and third-type information indicating whether an operation indicating consent to the second permission content is accepted are transmitted to the electronic device.

4. The information processing apparatus according to claim 3,
wherein the predetermined condition is that the capability information indicates that the electronic device has a capability of storing each of the consent statuses for both the first permission content and the second permission content.

5. The information processing apparatus according to claim 4,
wherein, in a case where the capability information acquired by the acquisition unit meets the predetermined condition, the control unit performs control so that neither the first information nor the second information is transmitted to the electronic device.

6. The information processing apparatus according to claim 1,
wherein the first permission content is permission content related to transmitting information for the electronic device to utilize a service provided by a server system, and the second permission content is permission content related to transmitting information indicating a utilization status of the electronic device.

7. The information processing apparatus according to claim 1,
wherein, if a specific condition is not met, the control unit performs control so that,
in a case where an operation indicating consent to both the first permission content and the second permission content is accepted, the first information is transmitted to the electronic device, and
in a case where an operation indicating non-consent to at least one of the first permission content and the second permission content is accepted, the second information is transmitted to the electronic device.

8. The information processing apparatus according to claim 7,
wherein the specific condition is that the electronic device supports utilization of a specific service that requires transmission of information to a server system.

9. The information processing apparatus according to claim 8,
wherein the specific service is a service controlled based on a utilization status of the electronic device.

10. The information processing apparatus according to claim 9,
wherein the electronic device is a printer, and the specific service is a subscription service that allows printing to be performed up to a maximum number of pages at a flat rate for a predetermined period.

11. The information processing apparatus according to claim 1,
wherein the electronic device is a printer.

12. An information processing apparatus comprising:
an acceptance unit configured to accept a user operation indicating whether or not consent is given to a first permission content, which is related to information transmission from an electronic device, and a user operation indicating whether or not consent is given to a second permission content, which is different from the first permission content and related to information transmission from the electronic device; and
a control unit configured so that,
in a case where an operation indicating consent to both the first permission content and the second permission content is accepted, control of transmitting to the electronic device first information, which corresponds to consent, is performed,
in a case where an operation indicating non-consent to both the first permission content and the second permission content is accepted, control of transmitting to the electronic device second information, which corresponds to non-consent, is performed, and
in a case where an operation indicating consent to one of the first permission content and the second permission content is accepted and an operation indicating non-consent to the other one of the first permission content and the second permission content is accepted, control of transmitting to the electronic device the second information is performed without transmitting information indicating consent to the one of the first permission content and the second permission content.

13. A method for controlling an information processing apparatus, the method comprising:
an acceptance step for accepting a user operation indicating whether or not consent is given to a first permission content, which is related to information transmission from an electronic device, and a user operation indicating whether or not consent is given to a second permission content, which is different from the first permission content and related to information transmission from the electronic device; and
a control step in which,
in a case where an operation indicating consent to the first permission content is accepted and an operation indicating consent to the second permission content is accepted, control of transmitting to the electronic device first information, which corresponds to consent, is performed,
in a case where an operation indicating consent to the first permission content is accepted and an operation indicating non-consent to the second permission content is accepted, control of transmitting the first information to the electronic device is performed without transmitting information indicating non-consent to the second permission content, and
in a case where an operation indicating non-consent to the first permission content is accepted, control of transmitting to the electronic device second information, which corresponds to non-consent, is performed regardless of whether or not an operation indicating consent to the second permission content is accepted.

14. A method for controlling an information processing apparatus, the method comprising:
an acceptance step for accepting a user operation indicating whether or not consent is given to a first permission content, which is related to information transmission from an electronic device, and a user operation indicating whether or not consent is given to a second permission content, which is different from the first permission content and related to information transmission from the electronic device; and
a control step in which,
in a case where an operation indicating consent to both the first permission content and the second permission content is accepted, control of transmitting to the electronic device first information, which corresponds to consent, is performed,
in a case where an operation indicating non-consent to both the first permission content and the second permission content is accepted, control of transmitting to the electronic device second information, which corresponds to non-consent, is performed, and
in a case where an operation indicating consent to one of the first permission content and the second permission content is accepted and an operation indicating non-consent to the other one of the first permission content and the second permission content is accepted, control of transmitting to the electronic device the second information is performed without transmitting information indicating consent to the one of the first permission content and the second permission content.

15. A program for causing a computer to function as the information processing apparatus according to any one of claims 1 to 12.

16. A computer-readable storage medium storing a program for causing at least one computer to function as each of the units of the information processing apparatus according to any one of claims 1 to 12.
